**Europäisches Patentamt**

**European Patent Office**

**Office européen des brevets**

(19)

(11) Veröffentlichungsnummer : **0 383 286 B1**

(12) **EUROPÄISCHE PATENTSCHRIFT**

(45) Veröffentlichungstag der Patentschrift :
03.06.92 Patentblatt 92/23

(51) Int. Cl.⁵ : **B60P 7/08**

(21) Anmeldenummer : **90102844.9**

(22) Anmeldetag : **14.02.90**

(30) Priorität : **14.02.89 DE 8901654 U**

(43) Veröffentlichungstag der Anmeldung :
**22.08.90 Patentblatt 90/34**

(45) Bekanntmachung des Hinweises auf die
Patenterteilung :
**03.06.92 Patentblatt 92/23**

(84) Benannte Vertragsstaaten :
**BE CH DE DK ES FR GB GR IT LI NL SE**

(56) Entgegenhaltungen :
**DE-B- 1 290 878**
**US-A- 3 429 537**

(73) Patentinhaber : **ANCRA Jungfalk GmbH**
**Richard-Stocker-Strasse 19, Postfach 13 09**
**W-7707 Engen (DE)**

(72) Erfinder : **Franz, Karl**
**Kiebitzweg 7**
**W-5600 Wuppertal 1 (DE)**

(74) Vertreter : **Hiebsch, Gerhard F., Dipl.-Ing. et al**
**Hiebsch & Peege Patentanwälte Postfach 464**
**Erzbergerstrasse 5a**
**W-7700 Singen 1 (DE)**

(54) **Zurrgurt, insbesondere mit Zurrhaken zum Einführen in eine Öse od. dgl. einer Ladefläche.**

**Beschreibung**

Die Erfindung betrifft einen Zurrgurt mit an diesem angeordnetem plattenartigen Verbindungsglied, insbesondere mit Zurrhaken zum Einführen in eine an einer Ladefläche od.dgl. angeordnete Öse als Gegenglied.

Es ist eine Vielzahl von flachen Haken für ein Zurrgurt bekannt, welcher durch einen Schlitz des Zurrhakens hindurchgeführt ist und einen Teil des Zurrhakens in einer Tasche des Zurrgurtes hält. Derartige bekannte Zurrhaken können beispielsweise aus einer Metallplatte hergestellt sein, von der ein Hakenschenkel abragt.

Als Nachteil bei bekannten Zurrgurten dieser Art hat sich erwiesen, daß der Zurrgurt in Ruhelage stets in der Längsachse des Zurrhakens verläuft und zur Befestigung von Ladegut oftmals in einem Winkel zu dieser Längsachse geführt werden muß. Dies bedeutet eine Mehrbelastung im Bereich einer der Zurrgurtkanten, außerdem entstehen im Zurrgurt selbst Falten.

Angesichtes dieser Gegebenheiten hat sich der Erfinder das Ziel gesetzt, derartige Belastungsfälle und Faltenbildungen zu vermeiden.

Zur Lösung dieser Aufgabe führt, daß das Verbindungsglied, also beispielsweise der Zurrhaken, ein in seiner Fläche drehbares Einsatzstück aufweist, in dem der Zurrgurt festgelegt ist. Hierzu hat sich ein kreisförmiger Durchbruch in der Platte des Verbindungsgliedes als günstig erwiesen, in dem als Einsatzstück eine den Zurrgurt aufnehmende Scheibe drehbar lagert. Ist in dieser Scheibe ein Langloch oder ein Schlitz vorgesehen, so kann der Zurrgurt durch letzteres/letzeren hindurchgeführt und das eine Zurrgurtende außerhalb des Zurrhakens mit dem Zurrgurt fest verbunden werden.

Dank dieser Maßgaben kann der Zurrgurt zumindest in einem Winkel von 90° aus der Längsachse des Zurrhakens herausgeführt werden, ohne daß die vorbeschriebene Faltenbildung entstehen würde. Die Gurtaufnahme im Zurrhaken stellt sich jeweils auf die Richtung des Bandzuges ein.

Um die Scheibe drehbar im Durchbruch zu halten, ist diese vorteilhafterweise mit zwei ihren Durchmesser übergreifenden Abdeckscheiben versehen; die überstehenden ringartigen Teile dieser Abdeckscheiben bilden -- den Randbereich des Durchbruches übergreifende -- Flanschringe. Dank des sandwichartigen Aufbaues von Abdeckscheibe/Scheibe/Abdeckscheibe ist das Einsatzstück problemlos in der Zurrhakenplatte festzulegen.

Zur Verbesserung der Bewegungsfreiheit des Gurtes bei seinem Weg um das etwa in Schlitzmitte liegende Hakenzentrum ist ein Ende des Zurrhakens halbkreisförmig gerundet - diesem einen Ende liegt anderseits der bereits beschriebene Hakenschenkel gegenüber.

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in

Fig. 1: die Draufsicht auf einen Grundkörper eines Zurrhakens;
Fig. 2: den Schnitt durch Fig. 1 nach deren Linie II-II;
Fig. 3: die Draufsicht auf den Zurrhaken;
Fig. 4: den Schnitt durch Fig. 3 nach deren Linie IV-IV.

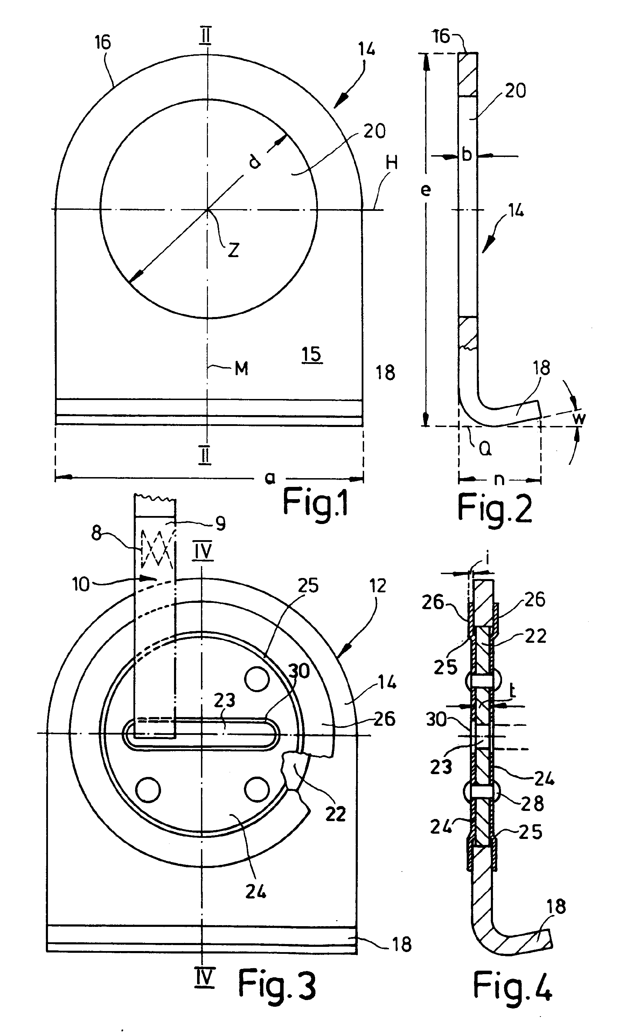

Ein bei 10 lediglich angedeuteter Zurrgurt ist endwärts mit einem Zurrhaken 12 versehen, dessen Grundkörper 14 aus einer Metallplatte der Breite a von hier 100 mm und einer Dicke b von 6 mm besteht. Der Grundkörper 14 ist nach Fig. 1 oberhalb einer Horizontalen H mit einer halbkreisförmigen Kontur 16 versehen und am anderen Ende unter Bildung eines kurzen Hakenschenkels 18 der Länge n von etwa 26 mm abgekantet. Letzterer schließt mit einer Senkrechten Q zur Oberfläche 15 des Grundkörpers 14 einen Winkel w von etwa 10° ein. Die Länge e dieses Grundkörpers 14 beträgt 120 mm.

Jener horizontale Durchmesser H des Grundkörpers 14 bildet mit dessen dazu rechtwinkliger Mittellinie M den Mittelpunkt Z für jene Halbkreiskontur 16 sowie für einen zentrischen Durchbruch 20 eines Durchmessers d von etwa 70 mm.

Im Durchbruch 20 lagert eine darin drehbare Scheibe 22 einer Dicke t von etwa 4 mm mit auf einem Durchmesser verlaufenden -- beidends gerundeten -- Schlitz 23. Beide Oberflächen der Scheibe 22 sind von kreisförmigen Abdeckscheiben 24 geringer Dicke i überdeckt, die bei 25 nach außen gekröpft sind; die so entstehenden Ringränder 26 übergreifen haltend den Randbereich des Durchbruches 20, wie dies vor allem Fig. 4 verdeutlicht.

Die Abedeckscheiben 24 sind durch Niete 28 fest mit der zwischen innenliegenden Scheiben 22 verbunden und ebenfalls mit Mittelschlitzen 30 ausgestattet, die den Schlitz 23 der Scheibe 22 beidseits freigeben.

Ein Ende 9 des Zurrgurtes 10 ist durch die Schlitze 23, 30 hindurchgeführt und außerhalb des Zurrhakens 12 mit dem ablaufenden Gurtende bei 8 vernäht oder in anderer Weise an diesem festgelegt. Dieses Gurtband 10 kann sich dank der drehbaren Lagerung im Grundkörper 14 ohne weiteres auf die Richtung des Bandzuges einstellen.

EP 0 383 286 B1

**Patentansprüche**

1. Zurrgurt mit an diesem angeordnetem plattenartigen Verbindungsglied, insbesondere mit Zurrhaken zum Einführen in eine an einer Ladefläche od.dgl. angeordnete Öse als Gegenglied,

dadurch gekennzeichnet,

daß das Verbindungsglied (12) ein in seiner Fläche drehbares Einsatzstück (22) aufweist, in dem der Zurrgurt (10) festgelegt ist.

2. Zurrgurt nach Anspruch 1, dadurch gekennzeichnet, daß das plattenartige Verbindungsglied (12) einen kreisförmigen Durchbruch (20) aufweist, in dem eine den Zurrgurt (10) aufnehmende Scheibe als Einsatzstück (22) in der Plattenebene drehbar lagert.

3. Zurrgurt nach Anspruch 1 oder 2, dadurch gekennzeichnet, daß das Einsatzstück (22) mit dessen Umfang beidseits überragenden ringförmigen Flanschteilen (26) versehen ist, welche den Randbereich des Durchbruches (20) übergreifen.

4. Zurrgurt nach Anspruch 2 oder 3, gekennzeichnet durch beidseits der Scheibe (22) an dieser festgelegte Abdeckscheiben (24) größeren Durchmessers, welche außerhalb des Umfanges der Scheibe (22) die Flanschteile (26) bilden.

5. Zurrgurt nach wenigstens einem der Ansprüche 1 bis 4, gekennzeichnet durch einen die Scheibe (22) und ihre Abdeckscheiben (24) durchsetzenden Schlitz (23, 30) für den Zurrgurt (10).

6. Zurrgurt nach wenigstens einem der Ansprüche 1 bis 5, dadurch gekennzeichnet, daß ein Abschnitt des kreisförmigen Durchbruches (20) an einer teilkreisförmigen Außenkontur (16) des Verbindungsgliedes (12) angeordnet ist.

7. Zurrgurt nach wenigstens einem der Ansprüche 1 bis 6, dadurch gekennzeichnet, daß die teilkreisförmige Außenkontur (16) das eine Ende des plattenartigen Verbindungsgliedes (12) bildet, welchem andernends ein aus letzterem herausgebogener Hakenschenkel (17) gegenüberliegt.

**Claims**

1. Lashing strap provided with a plate-like connection piece, in particular with a lashing hook for insertion into an eyelet or the like arranged as a counterpiece on a loading floor,

characterised in that

the connection piece (12) has an insert (22) rotatable in its surface, in which the lashing strap (10) is fixed.

2. Lashing strap according to claim 1, characterised in that the plate-like connection piece (12) has a circular hole (20), in which a disc receiving the lashing strap (10) is pivotally mounted as an insert (22) in the plate plane.

3. Lashing strap according to claim 1 or claim 2, characterised in that the insert (22) is provided with annular flange portions (26) projecting at either side of its circumference, said flange portions engaging the edge region of the hole (20).

4. Lashing strap according to claim 2 or claim 3, characterised by cover discs (24) of larger diameter fixed to either side of the disc (22) and forming the flange portions (26) outside the circumference of the disc (22).

5. Lashing strap according to at least one of claims 1 to 4, characterised by a slot (23, 30) for the lashing strap (10) passing through the disc (22) and its cover discs (24).

6. Lashing strap according to at least one of claims 1 to 5, characterised in that a section of the circular hole (20) is arranged on a semi-circular external contour (16) of the connection piece (12).

7. Lashing strap according to at least one of claims 1 to 6, characterised in that the semi-circular external contour (16) forms one end of the plate-like connection piece (12), a hook branch (17) bent out of the latter lying opposite it at the other end.

**Revendications**

1. Sangle d'amarrage sur laquelle est disposé un organe de liaison en forme de plaque, en particulier avec crochet d'amarrage destiné à être engagé dans une boucle faisant office d'organe conjugué et disposée sur une surface de chargement ou analogue,

caractérisée

en ce que l'organe de liaison (12) comporte une pièce d'insert (22) pouvant tourner dans sa surface, et dans laquelle est fixée la sangle d'amarrage (10).

2. Sangle d'amarrage selon la revendication 1. caractérisée en ce que l'organe de liaison (12) en forme

3

de plaque présente un orifice (20) de forme circulaire, dans lequel un disque recevant la sangle d'amarrage (10) et faisant office de pièce d'insert (22) est monté tournant dans le plan de la plaque.

3. Sangle d'amarrage selon la revendication 1 ou 2, caractérisée en ce que la pièce d'insert (22) comporte des parties formant joues (26), de forme annulaire, qui dépassent de chaque côté sa périphérie, et qui chevauchent la zone de bordure de l'orifice (20).

4. Sangle d'amarrage selon la revendication 2 ou 3, caractérisée par des disques de recouvrement (24) fixés de part et d'autre du disque (22) et ayant plus grand diamètre que lui, ces disques de recouvrement constituant les parties formant joues (26), à l'extérieur de la périphérie du disque (22).

5. Sangle d'amarrage selon l'une au moins des revendications 1 à 4, caractérisée par une fente (23, 30) destinée à la sangle d'amarrage (10) et traversant le disque (22) et ses disques de recouvrement (24).

6. Sangle d'amarrage selon l'une au moins des revendications 1 à 5, caractérisée en ce qu'une partie de l'orifice (20) de forme circulaire est disposée adjacente à un contour extérieur (16) en forme d'arc de cercle, de l'organe de liaison (12).

7. Sangle d'amarrage selon l'une au moins des revendications 1 à 6, caractérisée en ce que le contour extérieur (16) en forme d'arc de cercle constitue l'une des extrémités de l'organe de liaison (12) en forme de plaque, extrémité qui est opposée à une aile formant crochet (18) située à l'autre extrémité de la plaque, à partir de laquelle cette aile est obtenue par pliage.

Fig.1

Fig.2

Fig.3

Fig.4